# EUROPEAN PATENT SPECIFICATION

(11) **EP 3 464 739 B1**
(45) Date of publication and mention of the grant of the patent: **19.05.2021**
(21) Application number: 16753984.0
(22) Date of filing: 29.07.2016
(51) Int. Cl.: E03D 11/14

(54) **DEVICE FOR THE WALL INSTALLATION OF A SANITARY FURNITURE ITEM**
VORRICHTUNG ZUR WANDINSTALLATION EINES SANITÄRMÖBELELEMENTS
DISPOSITIF POUR L'INSTALLATION MURALE D'UN ARTICLE D'AMEUBLEMENT SANITAIRE

(30) Priority: 24.05.2016 ES 201630663 U
(43) Date of publication of application: 10.04.2019
(73) Proprietor: Ceravalls Pujol, Ramon, 08211 Castellar del Valles (ES); Lopez Puche, Nuria, 08211 Castellar del Valles (ES)
(72) Inventor: BARROSO OSSORIO, José Manuel, 08211 Castellar Del Valles (ES); COPETE VILELLA, Angel, 08211 Castellar Del Valles (ES)
(74) Representative: Ponti & Partners, S.L.P
(86) International application number: PCT/IB2016/054563
(87) International publication number: WO 2017/203335

(56) References cited:
- EP-A1- 2 985 477
- EP-A1- 2 985 477
- EP-A1- 3 033 979
- CN-A- 104 358 299
- CN-U- 203 684 353
- CN-U- 203 684 353
- DE-A1-102013 112 005
- DE-U1- 29 704 716
- DE-U1-202005 014 807
- DE-U1-202010 009 280
- JP-A- 2015 199 185
- KR-A- 20120 096 852

## Description

The present invention relates to a device for the wall installation of a sanitary furniture item, such as for example a toilet. In particular, the present invention relates to a device enabling the affixing of a sanitary furniture item to a wall while maintaining the affixing components hidden from view. It also relates to an access rod for tightening a tightening screw in a thread of an orifice of a clamping sleeve of said device.

### Background of the invention

Toilets adapted to be suspended or hung from a wall by means of a mural pre-installation including a hidden system where the water cistern and downpipe are housed, and a number of studs from which the toilet is suspended are well known. The installation of this type of toilets is performed by means of affixing devices or systems which remain hidden from view once the toilet has been installed on the studs anchored in the wall.

Devices for the mural installation of toilets are available in the market; these each comprising an affixing tube featuring an internal thread for its coupling to a stud anchored in the wall, a clamping sleeve susceptible to surround in the state of use a section of said affixing tube, and a holding piece coupleable with the sleeve to hold said sleeve against an internal wall of the toilet during pre-installation. To fix the toilet on the wall, the clamping sleeve presents an orifice featuring an internal thread destined to receive a tightening screw susceptible to act upon the slanting surface of a slot provided in the affixing tube. Tightening the screw against the slanting surface of the slot in the tube causes a thrusting effect of the sleeve against the toilet suspended on the wall.

The mural installation of the toilet is executed, firstly, by assembling the sleeve and the holding piece in the through-hole of the toilet, and secondly, suspending the toilet from the studs on which the affixing tube has previously been threaded, to this end inserting the affixing tube into the clamping sleeve via the through-hole in the toilet while the holding piece remains coupled to the sleeve. Subsequently, an Allen or similar key is used to tighten the tightening screw which acts upon the slanting surface of the slot in the affixing tube, to press the sleeve against the internal wall of the toilet, said toilet thus becoming affixed to the wall.

Access to the tightening screw by the key may be gained laterally, through a small hole performed in a lateral wall of the toilet which is subsequently covered with a trim, or may be gained from the base of the toilet. However, in both cases the turning of the tightening screw is always performed blind, with the toilet or sanitary furniture item suspended on the wall, which complicates and protracts the installation.

In fact, with the devices existing in the market, such as that of the Aldero-Karal® brand for example, it is extremely complicated to bring together the tightening key and the tightening screw when working blind from the exterior of the sanitary furniture item. Furthermore, there exists the danger that the tightening screw may become loose and fall during the threading operation, it then being extremely complicated to re-thread said screw into the orifice in the sleeve while said sleeve remains hidden within the sanitary unit.

In addition, a common occurrence when inserting the tube into the sleeve in order to suspend the toilet from the wall, or when inserting the Allen key while working blind, is that the sleeve will move, the tightening screw housed within the sleeve becoming misaligned with the slot in the affixing tube. Should this happen, it is necessary to remove the toilet, to set the sleeve in its correct position and to re-insert the affixing tube into the through-hole of the toilet, entailing a slow, irritating installation, particularly if one bears in mind that this type of sanitary furniture is usually made of ceramic material and its weight is therefore considerable.

Document CN104358299A discloses a mounting structure for a wall-hung toilet. The mounting structure comprises an auxiliary member with a funnel section for receiving a screw. This auxiliary member is provided with a mounting pin and positioning pin. The positioning pin is mounted on a platform, next to a hole. According to this document, the holding piece includes an external thread at one of its extremities and a rim at the other extremity provided with a locking recess. An auxiliary member is designed to engage the locking recess to manually rotate the locking member to the clamping piece.

Document DE 10 2013 112005A1 discloses a fastener for a wall-hung toilet with a sleeve-shaped abutment and a retaining sleeve. The retaining sleeve (a holding piece) must rotate to be engaged on the abutment (a clamping sleeve). In fact, the retaining sleeve is provided with a tool seat for a rotary tool such as a screwdriver. The retaining sleeve must be rotated by 90º to loosen it from the abutment (the clamping sleeve).

### Description of the invention

The objective of the present invention is to resolve the aforementioned drawbacks by providing a device for the mural installation of a sanitary furniture item such as, for example, a toilet, and presenting the advantages to be described below.

In accordance with this objective, according to a first aspect, the present invention provides a device for the wall installation of a sanitary furniture item according to claim 1.

According to a second aspect, the present invention provides an assembly according to claim 13 of sanitary furniture and device such as that claimed, where said sanitary item comprises a through-hole through which the holding piece coupleable with the sleeve is inserted, in order to affix said clamping sleeve against an internal wall of the sanitary furniture item. The locking means of said device prevent the clamping sleeve from moving in a radial direction in order to facilitate the affixing of the sanitary furniture item when working blind, as the orifice of the external tubular housing which receives the tightening screw is permanently aligned with the slot in the affixing tube.

In the present invention, an external housing, preferably an external tubular housing, of the body itself of the clamping sleeve defines a section that facilitates the mating of the tightening key with the orifice of the clamping sleeve. Additionally, due to the presence of the aforementioned locking means of the device, the position of the section of the external housing including the orifice which receives the tightening screw remains fixed, thus ensuring the rapid finding of said orifice and the alignment of the screw with the slot in the affixing tube. In fact, with the claimed device, the turning of the tightening screw may be performed blind from the exterior of the furniture item without problems.

According to one embodiment, the clamping sleeve body itself defines, in correspondence with the orifice which receives the tightening screw, an external tubular housing including a section, preferably a broadening section, adapted to facilitate the location of the tightening screw from the exterior of the furniture item, and advantageously, according to the same embodiment, the holding piece of the clamping sleeve comprises locking means adapted to enter into contact with the internal wall of the through-hole of the furniture item, said locking means preventing the radial movement of the holding piece when this piece is coupled to the clamping sleeve.

Once more, according to the same embodiment, it is provided a device for the wall installation of a sanitary furniture item, comprising an affixing tube, preferably an affixing tube provided with an internal thread for its coupling to an affixing rod anchored in a wall, a clamping sleeve susceptible in a state of use to surround a section of said affixing tube, and a piece coupleable with the sleeve via a through-hole in the furniture item in order to hold the sleeve against an internal wall of said furniture item during pre-installation, said clamping sleeve including an internal thread destined to receive a tightening screw susceptible to act upon the slanting surface of a slot provided in the affixing tube, in order to cause a thrusting effect of the clamping sleeve against the sanitary furniture item suspended on the wall, said affixing element and said clamping sleeve being susceptible to remaining out of sight on completion of the installation. Said device is characterised by the fact that the body of the clamping sleeve itself defines, in correspondence with the orifice receiving the tightening screw, an external tubular housing provided with a section, preferably a broadening section, adapted to facilitate the location of the tightening screw from the exterior, and by the fact that the sleeve holding piece comprises locking means adapted to contact the internal wall of the through-hole of the furniture item and to prevent the radial movement of the holding piece when this is coupled to the sleeve, in order to facilitate the affixing of the sanitary furniture item when working blind, as the orifice of the external tubular housing which receives the tightening screw is permanently aligned with the slot in the affixing tube.

In the claimed device, a broadening section of an external tubular housing defining the body of the clamping sleeve itself facilitates the exact mating of the tightening key with the screw housed in the orifice of the sleeve. Additionally, due to the presence of the aforementioned locking means of the holding piece coupleable with the sleeve, the position of the orifice of the external tubular housing which receives the tightening screw remains fixed, thus ensuring the rapid finding of the broadening section and the alignment of the screw with the slot in the affixing tube, guaranteeing a precise, convenient and rapid installation.

Furthermore, unlike other devices in the state of the art, the device claimed is suited for any type of sanitary item, as the aforementioned locking means fix exactly the position of the sleeve with no need for the inclusion of seats, pivots or protuberances in the sanitary item to prevent the movement of the sleeve. Therefore, the claimed device features the added advantage of not conditioning the design of the sanitary furniture item.

The said locking means of the claimed device may be configured by any type of locking arrangement suitable to prevent the radial movement of the holding piece relative to the furniture item.

In a particular embodiment, the sleeve holding piece comprises a section, preferably a section with a substantially tubular configuration, which is insertable into the through-hole of the sanitary item, and the exterior surface of said tubular section includes a plurality of locking elements adapted to fit into the interior cavity of the hole in order to block the movement of the component at least in a radial direction.

Preferably, said locking elements are configured by way of ringed sectors on the external surface of the tubular section of the holding piece affixing component to be coupled to the sleeve. These locking elements or ringed sectors are susceptible to be deformed so as to remain locked in the internal wall of the through-hole of the sanitary furniture item, preventing the radial and axial movement of the holding piece and of the clamping sleeve coupled to the holding piece.

According to the invention, the holding piece is coupled to the clamping sleeve by means of a number of arms, said number of arms being preferably configured by way of a pincer to be press-fitted into the sleeve via the through-hole of the sanitary furniture.

Said arms comprise a surface including a plurality of coupling teeth disposed to co-operate by clipping into a number of protrusions on the interior of the clamping sleeve.

In this way, an optimal coupling between the clamping sleeve and the holding piece is ensured. Furthermore, these arms enable the adaptation of the coupling to the thickness of the through-hole of the sanitary furniture item, inserting the arms of the clamp to a greater or lesser extent, according to the thickness of the furniture item, thus achieving an adjustable attachment (for example, the thickness of the through-hole may vary between 28 and 50 mm, according to the type of toilet).

Advantageously, the extremity of the arms of the holding piece defines an arrow-shaped section capable of fitting in a shape complementarity manner into a recess performed in the internal wall of the cavity of the clamping sleeve in order to facilitate the insertion of the arms into said sleeve when working blind.

In accordance with an embodiment especially adapted for wall or mural installation, with access via the base of the sanitary furniture item or toilet, the device comprises an access rod for tightening said tightening screw and said access rod is associated with an element which acts as a cover for the orifice of said external housing, said cover element including an orifice for the passage of the said access rod.

The said access rod and said element which acts as a cover form a utensil to be coupled to the external housing which is capable of being protected by its own right. In fact, the said access rod and said cover element define subject-matter that may be claimed independently from the device.

Said access rod is associated with an element which acts as a cover for said orifice, said cover element including an orifice for the passage of the said access rod. In fact, said cover element and the access rod form a utensil to be coupled to the clamping sleeve during installation. This utensil may act as a tightening key when it is provided at one of its extremities with means for connecting the tightening screw. The cover element of the utensil may be coupled to the broadening section of the tubular housing of the sleeve so as to prevent the falling of the tightening screw during installation.

According to a fourth aspect not part of the present invention, it is provided a method for wall installation of a sanitary item with a device adapted for wall or mural installation of said sanitary item, characterized in that the tightening is carried out with said access rod, and in that it comprises the step of covering the orifice of the clamping sleeve with said cover element by removably connecting said cover element to said section, preferably a broadening section, of the external housing of the clamping sleeve. Advantageously, the method includes the step of tightening the tightening screw with said access rod whereas said cover element remains connected to the section of the external housing of the clamping sleeve.

Advantageously, said access rod includes retaining means for said element which acts as a cover and, preferably, said retaining means comprises a recess in the rod configured to cooperate with at least one retaining tab of said element which acts as a cover.

The element which acts as a cover is configured to be removably coupled to the external housing to prevent the tightening screw, or the rod itself, from falling during the installation of the device.

As stated, unlike the situation with current devices, with the claimed access rod there is no danger of the tightening screw, or the rod itself, falling when its threading is performed, as the element which acts as a cover for the orifice of the external housing prevents this.

Preferably, said access rod is provided with connection means for a tightening screw at one of its extremities, and includes at the opposite extremity of the same rod means to connect a tool, the cover element being provided between said means to connect said tool and said tightening screw.

Advantageously, the access rod is provided at one of its extremities with the tightening screw and at the other of its extremities with a section forming a bolt head adapted so as to enable the tightening of the screw via the rod, by means of a ratchet wrench (or spanner) from the base of the sanitary furniture item.

This bolt head enables the tightening of the screw by using a hexagonal spanner, for example an SW10 or SW13 10 mm or 13 mm hexagonal spanner, which is mated with the extremity of the access rod. This SW10 or SW13 type of spanner is the most common among fitters; this avoids the need to employ a special tightening tool, the bolt head enabling the optional use of a ratchet wrench for easy tightening from the base of the sanitary furniture item without exerting much force.

According to the one embodiment, the access rod is associated with an element which acts as a cover for an external tubular housing of the clamping sleeve, said cover element including the orifice for the passage of said access rod, and said cover element being susceptible to be coupled to the broadening section of the external tubular housing of the sleeve to prevent the falling of the tightening screw during the pre-installation of the device.

During installation, there exists the danger that the tightening screw may become loose and fall, it then being extremely complicated to re-thread the screw into the sleeve while this remains hidden within the sanitary unit. The device of the present invention presents the advantage that it comprises an element which acts as a cover, which may be coupled to the broadening section of the tubular housing of the sleeve so as to prevent the falling of the tightening screw during installation. In this sense, the cover element comprises an orifice for the passage of the access rod which has a diameter lower than the diameter of the tightening screw to prevent the falling of this screw.

Preferably, the tightening screw is formed or adhered to the extremity of the access rod, forming, together with the access rod and the element acting as a cover, a utensil susceptible to be coupled to the clamping sleeve during installation. In this way, the tightening screw cannot be lost.

Advantageously, the orifice in the clamping sleeve into which the tightening screw is threaded comprises a first level of thread configured to insert the tightening screw up to a determined depth in order to prevent the accidental collision of said screw with the affixing tube when the sleeve is inserted into the tube, and a second, different, level of thread configured for the tightening of the tightening screw until contact is made with the slanting surface of the slot in the tube.

The first level of thread prevents the insertion of the tightening screw more than necessary into the orifice of the sleeve, thus preventing collision with the affixing tube during installation. Furthermore, the external tubular housing of the sleeve is configured in such a way that when positioned at the first level of thread, the tightening screw is positioned flush with the internal hole of the section, preferably a broadening section, of the sleeve in order to facilitate the location of the tightening screw.

Preferably, the external surface of the body of the clamping sleeve defines a plurality of grooves adapted for grasping by the fingers of the user. In this way, the sleeve is simpler to manipulate and to position when working blind, especially when bearing in mind that the hands of sanitary fitters are usually damp.

Advantageously, the body of the clamping sleeve comprises at least one lug for insertion into the through-hole of the sanitary furniture item, said lug facilitating the centring of the sleeve during pre-installation.

Preferably, both the clamping sleeve and the sleeve holding piece are made of plastic material.

In the present invention, "sanitary furniture item" shall be understood to be preferably a toilet or a unit such as a urinal, a bidet or any other type of similar unit susceptible to be suspended on a wall.

"Tightening screw" shall be understood to be preferably a DIN 913 headless screw.

"Slanting surface of a slot provided in the affixing tube" shall be understood to be preferably a sloping surface generated by the execution of a substantially conical or truncated-conical recess in the affixing tube; preferably a metallic affixing tube or, preferably, an affixing tube provided with an internal thread for its coupling to an affixing rod anchored in a wall.

### Brief description of the drawings

For a better understanding of that which is described herein, a set of drawings is attached which, schematically and by way of a non-limiting example only, represent two practical cases of embodiments.
Figures 1 and 2 are two different perspective views of the clamping sleeve and of the holding piece coupleable with the clamping sleeve.
Figure 3 is a cross-sectional view of the clamping sleeve, showing an external tubular housing and a threaded orifice to receive the tightening screw.
Figure 4a shows a perspective view of the utensil employed for installation when accessed from the base of the sanitary furniture unit. This utensil includes the tightening screw formed or adhered to one extremity of the access rod, the element acting as a cover to be coupled to a broadening section of the sleeve, and a section with a bolt head for a ratchet wrench at the opposite extremity of the access rod.
Figure 4b shows a perspective view of an embodiment of the utensil to be coupled to the external housing of the clamping sleeve including an access rod for tightening a tightening screw and a cover element. Said cover element is provided with a plurality of retaining tabs which are disposed to cooperate with a recess in the rod to retain said cover element in position.
Figure 5 shows a cross-section of the utensil in figure 4a, coupled to the sleeve.
Figures 6a and 6b show schematic perspective views of a toilet and a detail of this toilet, depicting the clamping sleeve and the holding piece, to perform an installation carried out via an access point foreseen through an orifice in a lateral wall of the toilet. To facilitate understanding, the toilet has been depicted without the portion of the lateral wall featuring this access point.
Figure 7 shows a detail of the toilet in figures 6a, 6b, where the holding piece is coupled to the clamping sleeve via the through-hole of the toilet.
Figure 8 shows a perspective view of an affixing tube threaded onto a stud anchored in the wall, and a detail of the toilet where a clamping sleeve and a holding piece have been pre-installed.
Figures 9a and 9b show schematic perspective views of a toilet and a detail of this toilet, depicting the holding piece and the utensil coupled to the clamping sleeve in order to perform an installation carried out via an access point disposed at the base of the toilet. To facilitate understanding, the toilet has been depicted without the portion of the wall featuring this access point.
Figure 10 shows a detail of the toilet in figures 9a, 9b, where the holding piece and the clamping sleeve are pre-installed and ready for the insertion of the affixing tube.
Figure 11 shows a perspective view of a detail of the toilet in figures 9a, 9b, on completion of the installation of the toilet on the wall.
Figure 12 shows a schematic cross-sectional view of the device in figure 11, on completion of the installation of the toilet on the wall.

### Description of preferred embodiments

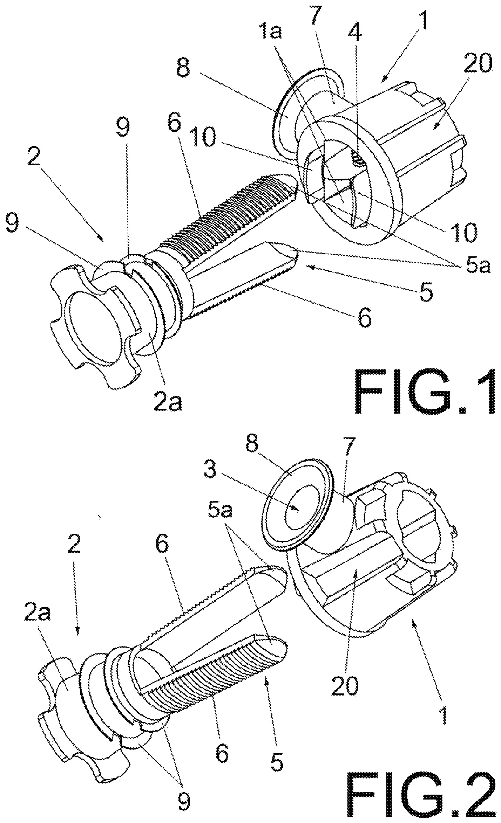

Two preferred embodiments of the device for the wall installation of a toilet are described below, with reference to figures 1 to 12.

Figures 1 and 2 show two perspective views of a clamping sleeve 1 susceptible to surround in the state of use a section of an affixing tube which is coupled to an affixing stud anchored in the wall. The same figures also portray two perspective views of the holding piece 2 designed to hold the clamping sleeve 1 against an internal wall of the toilet during the pre-installation of the device.

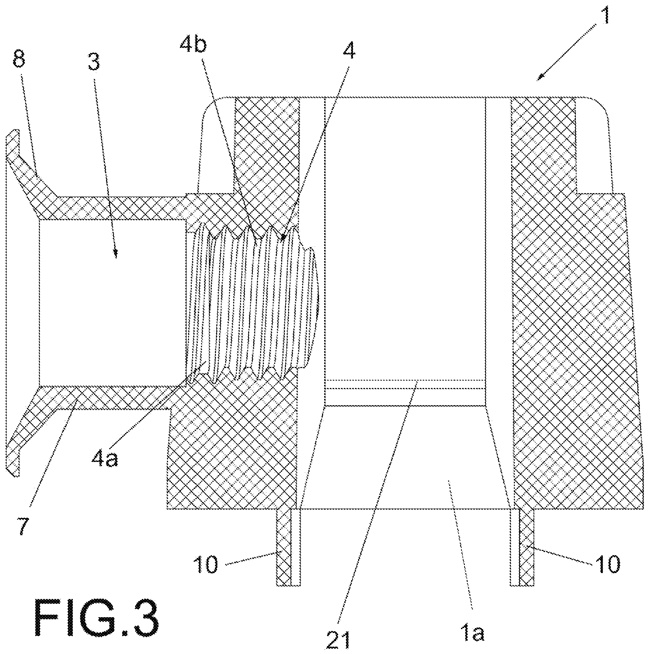

As may be seen in figure 1, the clamping sleeve 1 comprises an orifice 3 provided with an internal thread 4 to receive a tightening screw susceptible to act upon the slanting surface of a slot provided in the affixing tube in order to cause a thrusting effect of the sleeve against the toilet suspended on the wall. The holding piece 2 includes a tubular section 2a insertable into a through-hole in the toilet and a number of arms 5 configured similar to a clamp to be press-fitted into the internal cavity of the sleeve 1 via said through-hole. The arms 5 of the holding piece 2 present on their surfaces a plurality of coupling teeth 6 disposed to co-operate by clipping onto a number of protrusions on the interior of the sleeve 1 (see reference 21 in the cross-section portrayed in figure 3). The extremities 5a of the arms 5 are configured to define an arrow-shape capable of fitting in a shape complementarity manner into a recess 1a performed in the internal wall of the cavity of the clamping sleeve 1 in order to facilitate the insertion of the arms 5 into said sleeve 1 when working blind.

The device claimed and shown in the figures comprises a body of the clamping sleeve 1 which itself defines, in correspondence with the orifice 3 receiving the tightening screw, an external tubular housing 7 including a broadening section 8 adapted to facilitate the location of the tightening screw during installation. Besides, the external surface of the tubular section 2a of the holding piece 2 comprises locking means 9 adapted to fit into the interior cavity of the through-hole of the toilet in order to block the movement of the sleeve 1 and the holding piece 2 at least in a radial direction.

In the embodiments described and portrayed in the figures, the locking means 9 are configured to form ringed sectors on the external surface of the tubular section 2a, susceptible to be deformed so as to remain locked in the internal wall of the through-hole, so as to prevent movement both in a radial direction and axial direction of the holding piece 2, and therefore the movement of the clamping sleeve 1 which remains coupled to the holding piece 2 during pre-installation.

Figure 3 portrays a cross-section of the body of the clamping sleeve 1 showing the tubular housing 7 and the broadening section 8 disposed in correspondence with the orifice 3 which receives the tightening screw. As may be seen in this figure, the orifice 3 includes an internal thread 4 comprising two levels of thread 4. A first level 4a of thread 4 configured for the insertion of the tightening screw up to a specific depth to prevent accidental collision between the screw and the affixing tube, and a second, different, level 4b of thread 4 configured for the tightening of the tightening screw until contact is made with the slanting surface of the slot in the tube.

As has been mentioned in the description of the invention, the external tubular housing 7 of the sleeve 1 is configured in such a way that in the position of the first level 4a of thread, the tightening screw is positioned flush with the inner hole of the broadening section 8 of the clamping sleeve 1 in order to facilitate the rapid location of the tightening screw.

The cross-section in figure 3 also shows the protrusions 21 of the internal cavity of the clamping sleeve 1 which are disposed to co-operate by clipping together with the coupling teeth 6 of the clamp-like arms 5 of the holding piece 2. This same figure portrays the lugs 10 for insertion into the through-hole of the toilet, to facilitate the centring of the clamping sleeve 1 during pre-installation.

In accordance with an embodiment of the device specifically adapted for mural installation with access from the base of the toilet, the device incorporates a utensil 25, 25' that acts as a tightening key susceptible to be coupled to the clamping sleeve 1 during installation in order to avoid the accidental loss of the tightening screw.

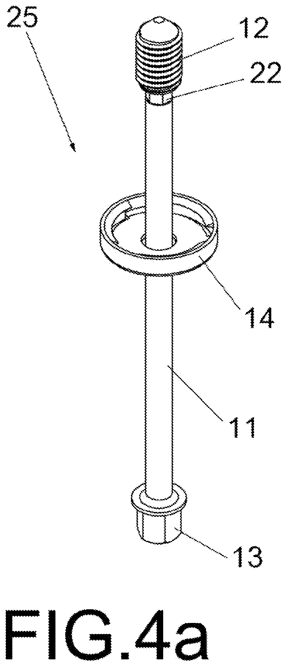

Figure 4a shows a perspective view of one embodiment of this utensil 25, which features an access rod 11 and the tightening screw 12 adhering to one of its extremities, and featuring at the other extremity a bolt head 13 adapted for the tightening of the screw 12 with the rod 11 by means of a ratchet wrench or spanner (not portrayed). As may be seen in figure 4a, this same utensil 25 comprises an element 14 which acts as a cover, which may be coupled to the broadening 8 of the external tubular housing 7 of the clamping sleeve 1. This element 14 or cover features an orifice 14b through which the access rod 11 passes.

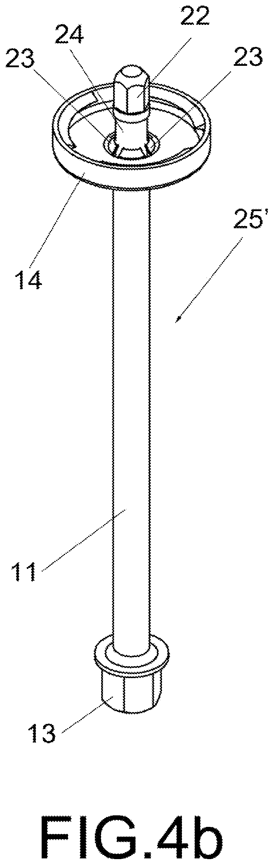

According to another embodiment of the utensil 25' as shown in figure 4b, one of the extremities of the access rod 11 is provided with connection means 22 for a tightening screw 12 and includes at the other extremity of the same rod 11 a bolt head 13 adapted for the tightening of the screw 12 by means of a ratchet wrench or spanner. In this embodiment, the cover element 14 is provided with a plurality of retaining tabs 23 configured to cooperate with a recess 24 provided in the access rod 11 to retain the said cover element 14 in position.

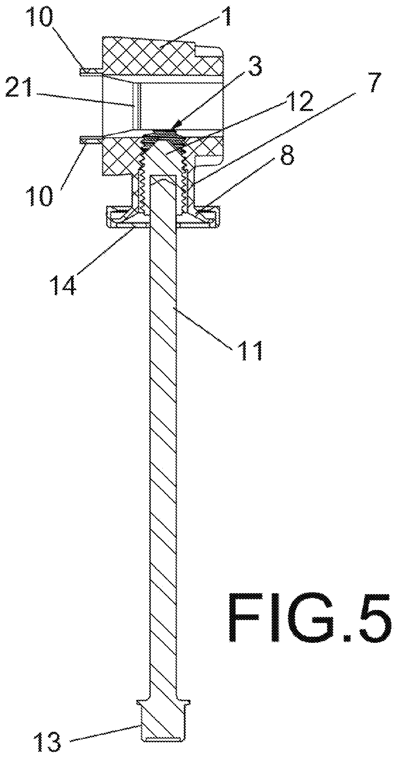

Figure 5 shows a cross-section of the aforementioned utensil 25 of figure 4a coupled to the clamping sleeve 1 by means of the cover element 14 which acts as a cover. This same cross-section depicts the tightening screw 12 inserted into the external tubular housing 7 subsequent to being threaded in to the depth determined by the first level 4a of the thread 4 in the orifice 3 of the clamping sleeve 1. As may be seen in figure 5, in this position determined by the first level 4a of thread 4, the tightening screw 12 remains substantially flush with the inner hole of the broadening section 8 of the external tubular housing 7.

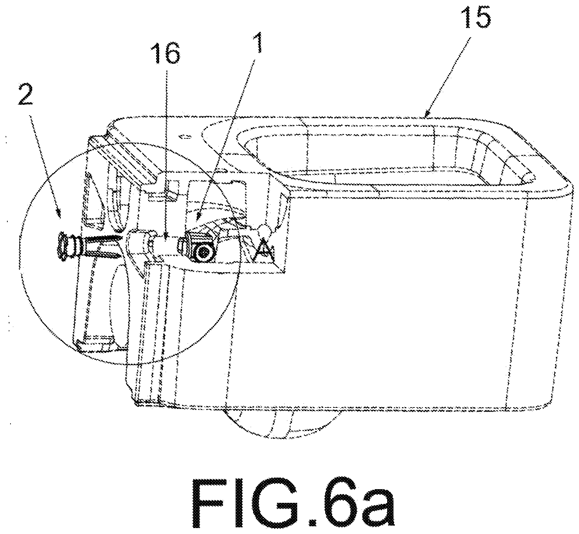

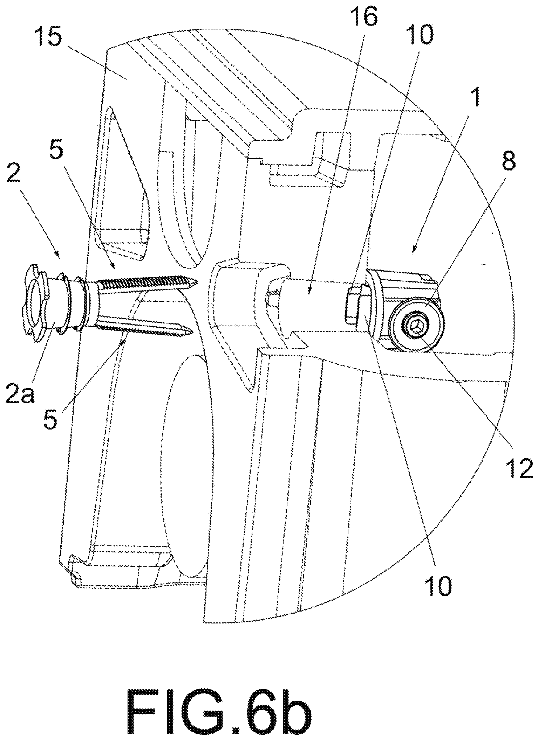

The operation of the device of the present invention will be described below with reference to figures 6 to 12, which portray two modes of installation of the toilet 15. A first mode wherein access for a tightening key is gained laterally, via a small orifice provided in a lateral wall of the toilet 15 itself, and a second mode, wherein access for the tightening key or the utensil 25 is gained from the base of the toilet 15.

### Mode of installation with lateral access for a tightening key

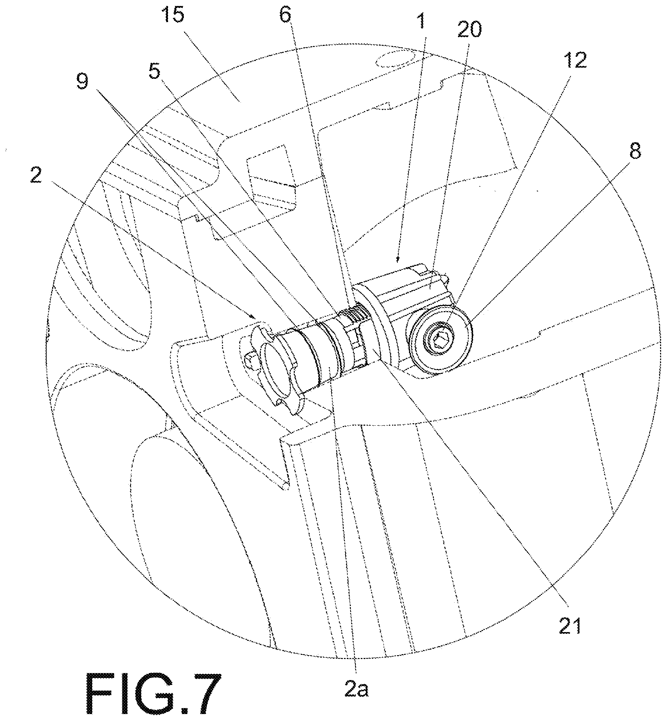

In a first stage of pre-installation, the clamping sleeve 1 is placed, with the aid of a number of grooves 20 adapted for grasping by the fingers of the user, on one side of the through-hole 16 of the toilet 15, in such a way that the broadening section 8 of the external tubular housing 7 is oriented toward the orifice for the access of a tightening key, and the lugs 10 are inserted into the through-hole 16. Next, the arms 5 of the holding piece 2 are coupled to the sleeve 1 from the opposite side, traversing the through-hole 16 (see figures 6 and 7). In this coupled position, the locking means 9 configured to form ringed sectors on the surface of the tubular section 2a of the holding piece 2 become locked in the cavity of the through-hole 16, preventing the movement of the holding piece 2 and of the sleeve 1 itself.

As has been mentioned in the description of the invention, the arms 5 of the holding piece 2 are coupled into the sleeve 1, adapting to the thickness of the through-hole 16, which may be larger or smaller in accordance with the model of toilet 15.

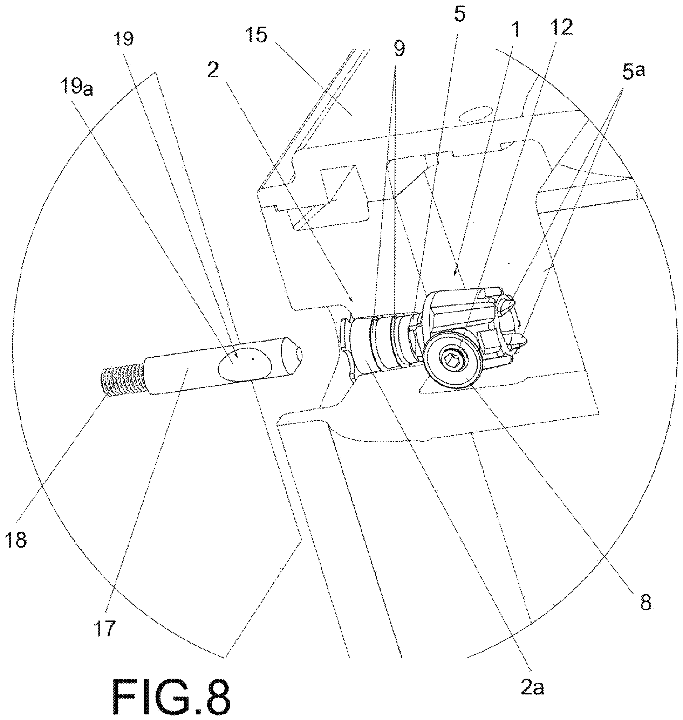

On completion of the pre-installation phase, both the clamping sleeve 1 and the holding piece 2 are fixed in a permanent position, suited to receive the affixing tube 17 which is coupled to the affixing stud 18 which is anchored to the wall of the bathroom. In this way it is ensured that at all times the slot 19 in the tube 17 is disposed in an aligned manner with the orifice 3 and the tubular housing 7 of the sleeve 1 in which the tightening screw 12 is located (see figure 8).

The installation is completed by inserting the tightening key (not portrayed) through the orifice in the lateral wall of the toilet 15 in order to turn the tightening screw 12 until it enters into contact with the slanting surface 19a of the slot 19 in order to cause the thrusting effect of the sleeve 1 against the toilet 15 suspended on the wall of the bathroom.

Although the threading is performed from the exterior of the toilet 15 while working blind, the device claimed presents the advantage that it ensures precise, rapid and convenient attachment, the attachment components remaining completely hidden from view.

### Mode of installation with access for a tightening key or utensil 25 from the base of the toilet

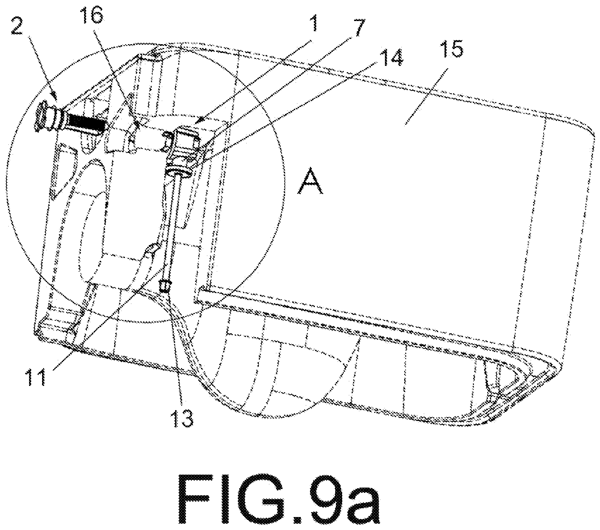

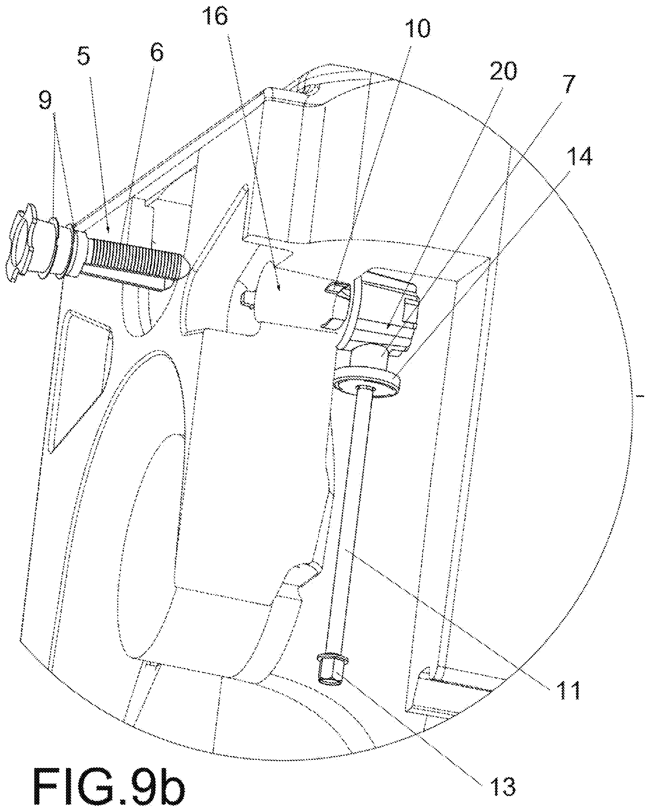

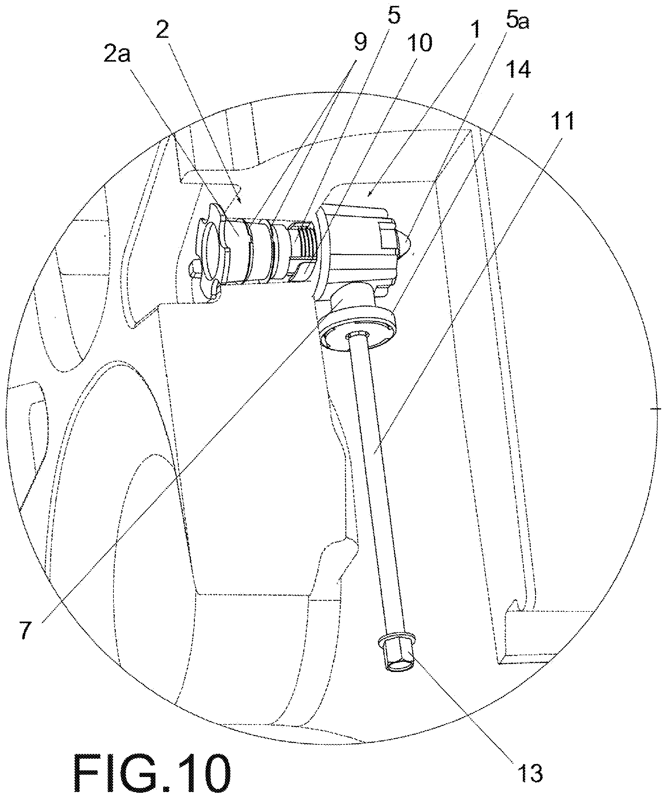

In a first stage of pre-installation, the utensil 25 consisting of the access rod 11, the tightening screw 12 adhering to one extremity of this rod 12 and the cover element 14 which acts as a cover, is coupled to the broadening section 8 of the clamping sleeve 1, forming a single installation unit with the clamping sleeve 1, which is positioned on one side of the through-hole 16 of the toilet 15 (see figure 9). Next, the arms 5 of the holding piece 2 are coupled to the sleeve 1 from the opposite side, traversing the through-hole 16 (see figure 10). In this coupled position, the locking elements 9 configured to form ringed sectors on the surface of the tubular section 2a of the holding piece 2 become locked in the cavity of the through-hole 16, preventing the movement of the holding piece 2 and of the clamping sleeve 1 itself.

Once pre-installation is complete, the affixing tube 17 is inserted into the sleeve 1 in such a way that the orifice 3 and the tubular housing 7, in which the tightening screw 12 is installed, are located aligned with the slot 19 in the affixing tube 17; the device now being ready for tightening.

Unlike the devices in the state of the art, on inserting the affixing tube 17 into the clamping sleeve 1 to suspend the toilet on the wall, or when fitting the tightening key or utensil 25 while working blind, the sleeve 1 will never move, as the locking means 9 of the holding piece 2 prevent the movement of the holding piece 2 within the through-hole 16. Furthermore, unlike the situation with current devices, with the device claimed there is no danger of the tightening screw 12, or the access rod 11 itself, falling when its threading is performed, as the element 14 acting as a cover for the tubular housing 7 prevents this.

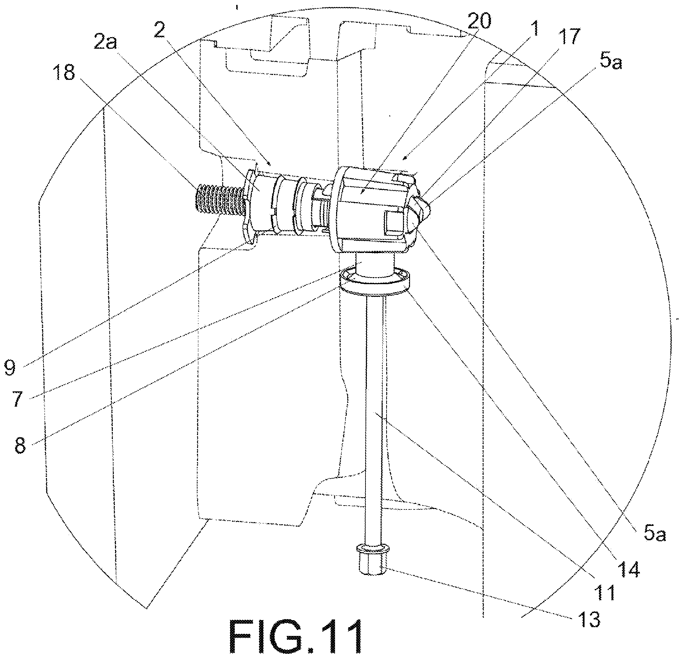

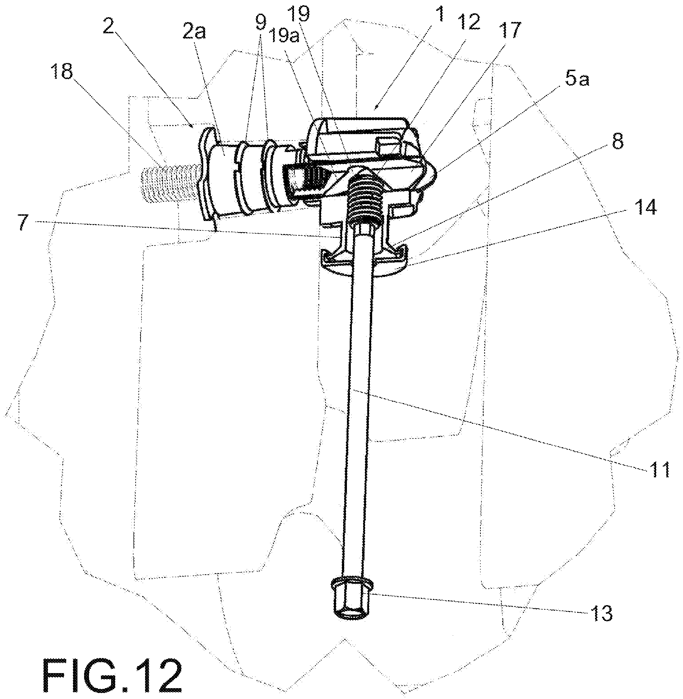

In this second mode of installation, a ratchet-type wrench (not portrayed) is coupled to the stretch of the rod 11 with a bolt head 13 in order to tighten the tightening screw 12 while working blind until it enters into contact with the slanting surface of the slot 19 in order to cause a pulling effect on the tube 17 which translates into a thrusting effect of the sleeve 1 against the toilet 15. Figure 11 shows a detail of the toilet 11 installed on the wall. Figure 12 is a schematic cross-section of figure 11, where all the components intervening in the installation in accordance with the second mode, with access from the base of the toilet 15, may be seen.

In spite of the fact that reference has been made to specific embodiments of the invention, it is evident to a person skilled in the art that the device described is susceptible to numerous variations and modifications, and that all the details mentioned may be substituted by other technically equivalent details, without departing from the scope of protection defined by the attached claims. For example, although a broadening section 8 of the external housing 7 has been described for facilitating location of the orifice of the clamping sleeve, it would be possible to provide a different section of the external housing on condition that said section is adapted to facilitate location of the orifice 3 of the clamping sleeve. Likewise, although the sleeve holding piece 2 has been described to include locking means 9 adapted to enter into contact with the internal wall of the through-hole of the furniture item, it would be possible to provide alternative means for locking on condition that said locking means are adapted to prevent the radial movement of the holding piece 2 relative to the furniture item.

## Claims

1. A device for the wall installation of a sanitary furniture item (15), comprising an affixing tube (17) anchorable to a wall, a clamping sleeve (1) susceptible to surround in a state of use a section of said affixing tube (17), and a holding piece (2) coupleable with the clamping sleeve (1) via a through-hole (16) in the furniture item (15) in order to be able to hold the clamping sleeve (1) against an internal wall of said furniture item (15) during pre-installation, said clamping sleeve (1) including an orifice (3) provided with an internal thread (4) to receive a tightening screw (12) susceptible to act upon a slanting surface (19a) of a slot (19) in the affixing tube (17) and to cause a thrusting effect of the clamping sleeve (1) against the sanitary furniture item (15) suspended on the wall, said holding piece (2) and said clamping sleeve (1) being susceptible to remain hidden from view on completion of the installation, the clamping sleeve (1) body itself defining, in correspondence with the orifice (3), an external housing (7) including a section (8) adapted to facilitate the location of the tightening screw (12) or the orifice (3) from the exterior of the furniture item (15), and the holding piece (2) coupleable with the clamping sleeve (1) comprising locking means (9) for preventing the radial movement of the holding piece (2) relative to the furniture item (15), **characterised in that**
- said holding piece (2) is coupleable to the clamping sleeve (1) via the through-hole (16) of the sanitary furniture item (15) by means of a plurality of arms (5) included on the holding piece (2), said arms (5) being preferably configured by way of a pincer to be press-fitted into the clamping sleeve (1) via the through-hole (16) of the sanitary furniture item (15), and
- said arms (5) comprise a surface provided with a plurality of coupling teeth (6) disposed to co-operate by clipping onto a number of protrusions (21) on the interior of the clamping sleeve (1), said arms (5) being susceptible to be coupled with the clamping sleeve (1) in an adjustable manner in accordance with the thickness of the through-hole (16) of the sanitary furniture item (15).

2. A device as claimed in claim 1, wherein the clamping sleeve (1) body itself defines, in correspondence with the orifice (3) which receives the tightening screw (12), the external tubular housing (7) including a broadening section (8) adapted to facilitate the location of the tightening screw (12) from the exterior of the furniture item (15).

3. A device as claimed in any of claims 1 to 2, wherein said holding piece (2) comprises a section (2a) of a substantially tubular configuration which is insertable into the through-hole (16) of the sanitary furniture item (15), the external surface of said tubular section (2a) including the locking means (9) adapted to fit into the internal cavity of the through-hole (16) in order to block the movement of said holding piece (2) at least in a radial direction.

4. A device as claimed in any of claims 1 to 3, wherein said locking means (9) are configured to form ringed sectors on the external surface of a tubular section (2a) of the holding piece (2), said rings being susceptible of becoming deformed so as to remain locked on the internal wall of the through-hole (16) in order to prevent the radial and axial movement of the holding piece (2) of the clamping sleeve (1).

5. A device as claimed in claim 1, wherein extremities (5a) of the arms (5) of the holding piece (2) define a section in the shape of an arrow capable of fitting in a shape complementarity manner into a recess (1a) performed in the internal wall of the cavity of the clamping sleeve (1) in order to facilitate the insertion of said arms (5) into the clamping sleeve (1) when working blind.

6. A device as claimed in any of the preceding claims especially adapted for wall or mural installation with access via the base of the furniture item (15), further comprising an access rod (11) for tightening said tightening screw (12), said access rod (11) being associated with an element (14) which acts as a cover for the said orifice (3) of said external housing (7) and said cover (14) element including an orifice for the passage of the said access rod (11).

7. A device as claimed in claim 6, wherein said access rod (11) includes retaining means for said element (14) which acts as a cover.

8. A device as claimed in claim 7, wherein said retaining means comprise a recess (24) in the access rod (11) configured to cooperate with at least one retaining tab (23) of said element (14) which acts as a cover

9. A device as claimed in any of claims 6 to 8, wherein said access rod (11) is provided at one of its extremities with connection means (22) for the tightening screw (12), and includes at the other extremity of the same rod means (13) to connect a tool, said cover element (14) being provided between said connection and rod means (22, 13) of the access rod (11).

10. A device as claimed in claim any of claims 6 to 9, wherein said access rod (11) is provided at one of its extremities with the tightening screw (12), and including at the other extremity of the same rod a bolt head (13) adapted for the tightening of the screw (12) with the rod (11) by means of a ratchet wrench or spanner.

11. A device as claimed in any of claims 6 to 10, wherein said tightening screw (12) is provided with or formed on or adhered to the extremity of said access rod (11), forming, together with the rod (11) and the element (14) which acts as a cover, an utensil (25) susceptible to being coupled to the clamping sleeve (1) during installation.

12. A device as claimed in any of claims 6 to 11, wherein said element (14) which acts as a cover is configured to be coupled to the external housing (7) to prevent the tightening screw (12) or the access rod (11) itself from falling during the pre-installation of the device.

13. An assembly of a sanitary furniture item (15) and device for the installation of said sanitary furniture item (15), as claimed in any of claims 1 to 12, wherein said sanitary furniture item comprises a through-hole (16) through which said holding piece (2) coupleable with the clamping sleeve (1) is inserted in order to hold said clamping sleeve (1) against an internal wall of said sanitary furniture item (15).

## Patentansprüche

1. Vorrichtung für die Wandinstallation eines Sanitärmöbelstücks (15), die ein Befestigungsrohr (17), das an einer Wand verankert werden kann, eine Klemmhülse (1), die im Einsatz einen Abschnitt des Befestigungsrohrs (17) umgibt, und ein Halteelement (2), das mit der Klemmhülse (1) über ein Durchgangsloch (16) in dem Möbelstück (15) gekoppelt wird, um die Klemmhülse (1) während Vorinstallation an einer Innenwand des Möbelstücks (15) halten zu können, umfasst, wobei die Klemmhülse (1) eine Öffnung (3) aufweist, die mit einem Innengewinde (4) zum Aufnehmen einer Befestigungsschraube (12) versehen ist, die auf eine schräge Fläche (19a) eines Schlitzes (19) in dem Befestigungsrohr (17) einwirkt und eine Presswirkung der Klemmhülse (1) gegen das Sanitärmöbelstück (15), das an der Wand aufgehängt ist, bewirkt, wobei das Halteelement (2) und die Klemmhülse (1) beim Beenden der Installation nicht sichtbar sind, wobei der Körper der Klemmhülse (1) in Verbindung mit der Öffnung (3) ein Außengehäuse (7) definiert, das einen Abschnitt (8) umfasst, der die Positionierung der Befestigungsschraube (12) oder der Öffnung (3) von außerhalb des Möbelstücks (15) erleichtert, und wobei das Halteelement (2), das mit der Klemmhülse (1) gekoppelt werden kann, Einrastmittel (9) umfasst, um eine radiale Bewegung des Halteelements (2) relativ zu dem Möbelstück (15) zu verhindern,
**dadurch gekennzeichnet, dass**
- das Halteelement (2) mit der Klemmhülse (1) über das Durchgangsloch (16) des Sanitärmöbelstücks (15) mittels mehrerer Arme (5), die an dem Halteelement (2) vorgesehen sind, gekoppelt werden kann, wobei die Arme (5) vorzugsweise so als Greifzange konfiguriert sind, dass sie über das Durchgangsloch (16) des Sanitärmöbelstücks (15) mittels Presspassung in die Klemmhülse (1) eingesetzt werden, und
- wobei die Arme (5) eine Oberfläche aufweisen, die mit mehreren Kopplungszähnen (6) versehen ist, die so angeordnet sind, dass sie durch Einklinken mit einer Anzahl von Vorsprüngen (21) auf der Innenseite der Klemmhülse (1) zusammenwirken, wobei die Arme (5) mit der Klemmhülse (1) in Übereinstimmung mit der Dicke des Durchgangslochs (16) des Sanitärmöbelstücks (15) einstellbar gekoppelt werden können.

2. Vorrichtung nach Anspruch 1, wobei der Körper der Klemmhülse (1) zusammen mit der Öffnung (3), die die Befestigungsschraube (12) aufnimmt, das rohrförmige Außengehäuse (7) definiert, das einen breiter werdenden Abschnitt (8) umfasst, der ausgelegt ist, die Positionierung der Befestigungsschraube (12) von außerhalb des Möbelstücks (15) zu erleichtern.

3. Vorrichtung nach einem der Ansprüche 1 bis 2, wobei das Halteelement (2) ein Teilstück (2a) mit einer im Wesentlichen rohrförmigen Konfiguration umfasst, das in das Durchgangsloch (16) des Sanitärmöbelstücks (15) eingesetzt wird, wobei die Außenfläche des rohrförmigen Teilstücks (2a) die Einrastmittel (9) umfasst, die so ausgelegt sind, dass sie in den inneren Hohlraum des Durchgangslochs (16) passen, um die Bewegung des Halteelements (2) wenigstens in einer radialen Richtung zu blockieren.

4. Vorrichtung nach einem der Ansprüche 1 bis 3, wobei die Einrastmittel (9) konfiguriert sind, ringförmige Teilstücke auf der Außenfläche eines rohrförmigen Teilstücks (2a) des Halteelements (2) zu bilden, wobei die Ringe so verformt werden können, dass sie an der Innenwand des Durchgangslochs (16) eingerastet bleiben, um die radiale und axiale Bewegung des Halteelements (2) der Klemmhülse (1) zu verhindern.

5. Vorrichtung nach Anspruch 1, wobei Endpunkte (5a) der Arme (5) des Halteelements (2) einen Abschnitt in der Form eines Pfeils definieren, der formschlüssig in eine Aussparung (1a) eingepasst werden kann, die in der Innenwand des Hohlraums der Klemmhülse (1) ausgebildet ist, um das Einsetzen der Arme (5) in die Klemmhülse (1) zu erleichtern, wenn blind gearbeitet wird.

6. Vorrichtung nach einem der vorhergehenden Ansprüche, die insbesondere für eine Wand- oder Mauerinstallation mit einem Zugang über die Basis des Möbelstücks (15) ausgelegt ist, die ferner eine Zugangs stange (11) zum Festziehen der Befestigungsschraube (12) umfasst, wobei die Zugangsstange (11) mit einem Element (14) versehen ist, das als Abdeckung für die Öffnung (3) des Außengehäuses (7) dient und wobei das Abdeckelement (14) eine Öffnung für den Durchtritt der Zugangsstange (11) aufweist.

7. Vorrichtung nach Anspruch 6, wobei die Zugangsstange (11) Haltemittel für das Element (14) umfasst, das als Abdeckung dient.

8. Vorrichtung nach Anspruch 7, wobei die Haltemittel eine Aussparung (24) in der Zugangsstange (11) umfassen, die so konfiguriert ist, dass sie mit wenigstens einer Haltelasche (23) des Elements (14), das als Abdeckung dient, zusammenwirkt.

9. Vorrichtung nach einem der Ansprüche 6 bis 8, wobei die Zugangsstange (11) an einem ihrer Endpunkte mit Verbindungsmitteln (22) für die Befestigungsschraube (12) versehen ist, und an dem anderen Endpunkt Stangenmittel (13) umfasst, um ein Werkzeug damit zu verbinden, wobei das Abdeckelement (14) zwischen der Verbindung und den Stangenmitteln (22, 13) der Zugangsstange (11) vorgesehen ist.

10. Vorrichtung nach einem der Ansprüche 6 bis 9, wobei die Zugangsstange (11) an einem ihrer Endpunkte mit der Befestigungsschraube (12) versehen ist, und an dem anderen Endpunkt der Stange einen Bolzenkopf (13) umfasst, der so ausgelegt ist, dass er die Schraube (12) mit der Stange (11) mittels eines Ratschenschlüssels oder eines Schraubenschlüssels festzieht.

11. Vorrichtung nach einem der Ansprüche 6 bis 10, wobei die Befestigungsschraube (12) an dem Endpunkt der Zugangsstange (11) vorgesehen ist oder ausgebildet ist oder daran hängt, wobei sie zusammen mit der Stange (11) und dem Element (14), das als Abdeckung dient, ein Werkzeug (25) bildet, das während der Installation mit der Klemmhülse (1) gekoppelt werden kann.

12. Vorrichtung nach einem der Ansprüche 6 bis 11, wobei das Element (14), das als Abdeckung dient, so konfiguriert ist, dass es mit dem Außengehäuse (7) gekoppelt wird, um zu verhindern, dass die Befestigungsschraube (12) oder die Zugangsstange (11) während der Vorinstallation der Vorrichtung herabfallen.

13. Baugruppe aus einem Sanitärmöbelstück (15) und einer Vorrichtung zum Installieren des Sanitärmöbelstücks (15) nach einem der Ansprüche 1 bis 12, wobei das Sanitärmöbelstück ein Durchgangsloch (16) umfasst, durch das das Halteelement (2), das mit der Klemmhülse (1) gekoppelt werden kann, eingesetzt wird, um die Klemmhülse (1) an einer Innenwand des Sanitärmöbelstücks (15) zu halten.

## Revendications

1. Dispositif pour l'installation murale d'un article d'ameublement sanitaire (15), comprenant un tube de fixation (17) pouvant être ancré dans un mur, un manchon de serrage (1) susceptible d'entourer, dans un état d'utilisation, une section dudit tube de fixation (17), et une pièce de maintien (2) pouvant être couplée au manchon de serrage (1) par l'intermédiaire d'un trou traversant (16) dans l'article d'ameublement (15) afin de pouvoir maintenir le manchon de serrage (1) contre une paroi interne dudit article d'ameublement (15) pendant une préinstallation, ledit manchon de serrage (1) comprenant un orifice (3) pourvu d'un filetage interne (4) destiné à recevoir une vis de serrage (17) susceptible d'agir sur une surface inclinée (19a) d'une encoche (19) dans le tube de fixation (17) et de provoquer un effet de poussée du manchon de serrage (1) contre l'article d'ameublement sanitaire (15) suspendu au mur, ladite pièce de maintien (2) et ledit manchon de serrage (1) étant susceptibles de rester cachés à la fin de l'installation, le corps du manchon de serrage (1) lui-même définissant, en correspondance avec l'orifice (3), un logement externe (7) comprenant une section (8) adaptée pour faciliter le positionnement de la vis de serrage (12) ou de l'orifice (3) depuis l'extérieur de l'article d'ameublement (15), et la pièce de maintien (2) pouvant être couplée au manchon de serrage (1) comprenant un moyen de verrouillage (9) pour empêcher le mouvement radial de la pièce de maintien (2) par rapport à l'article d'ameublement (15), **caractérisé en ce que**
- ladite pièce de maintien (2) peut être couplée au manchon de serrage (1) par l'intermédiaire du trou traversant (16) de l'article d'ameublement sanitaire (15) au moyen d'une pluralité de bras (5) compris sur la pièce de maintien (2), lesdits bras (5) étant de préférence conçus à la manière d'une pince pour être montés en force dans le manchon de serrage (1) par l'intermédiaire du trou traversant (16) de l'article d'ameublement sanitaire (15), et
- lesdits bras (5) comprennent une surface pourvue d'une pluralité de dents de couplage (6) disposées pour coopérer par clipsage sur un certain nombre de saillies (21) sur l'intérieur du manchon de serrage (1), lesdits bras (5) étant susceptibles d'être couplés au manchon de serrage (1) d'une manière réglable en fonction de l'épaisseur du trou traversant (16) de l'article d'ameublement sanitaire (15).

2. Dispositif selon la revendication 1, dans lequel le corps du manchon de serrage (1) lui-même définit, en correspondance avec l'orifice (3) qui reçoit la vis de serrage (12), le logement tubulaire externe (7) comprenant une section d'élargissement (8) adaptée pour faciliter le positionnement de la vis de serrage (12) depuis l'extérieur de l'article d'ameublement (15).

3. Dispositif selon l'une quelconque des revendications 1 ou 2, dans lequel ladite pièce de maintien (2) comprend une section (2a) d'une configuration sensiblement tubulaire qui peut être insérée dans le trou traversant (16) de l'article d'ameublement sanitaire (15), la surface externe de ladite section tubulaire (2a) comprenant le moyen de verrouillage (9) conçu pour s'adapter dans la cavité interne du trou traversant (16) afin de bloquer le mouvement de ladite pièce de maintien (2) au moins dans une direction radiale.

4. Dispositif selon l'une quelconque des revendications 1 à 3, dans lequel ledit moyen de verrouillage (9) est conçu pour former des secteurs annelés sur la surface externe d'une section tubulaire (2a) de la pièce de maintien (2), lesdits anneaux étant susceptibles de se déformer de façon à rester verrouillés sur la paroi interne du trou traversant (16) afin d'empêcher le mouvement radial et axial de la pièce de maintien (2) du manchon de serrage (1).

5. Dispositif selon la revendication 1, dans lequel des extrémités (5a) des bras (5) de la pièce de maintien (2) définissent une section de la forme d'une flèche pouvant s'adapter d'une manière complémentaire en forme dans un évidement (1a) réalisé dans la paroi interne de la cavité du manchon de serrage (1) afin de faciliter l'insertion desdits bras (5) dans le manchon de serrage (1) lors d'un travail à l'aveugle.

6. Dispositif selon l'une quelconque des revendications précédentes particulièrement adapté à l'installation murale avec accès par l'intermédiaire de la base de l'article d'ameublement (15), comprenant en outre une tige d'accès (11) pour serrer ladite vis de serrage (12), ladite tige d'accès (11) étant associée à un élément (14) qui agit comme un couvercle pour ledit orifice (3) dudit logement externe (7) et ledit élément de couvercle (14) comprenant un orifice pour le passage de ladite tige d'accès (11).

7. Dispositif selon la revendication 6, dans lequel ladite tige d'accès (11) comprend un moyen de retenue pour ledit élément (14) qui agit comme un couvercle.

8. Dispositif selon la revendication 7, dans lequel ledit moyen de retenue comprend un évidement (24) dans la tige d'accès (11) conçu pour coopérer avec au moins une patte de retenue (23) dudit élément (14) qui agit comme un couvercle.

9. Dispositif selon l'une quelconque des revendications 6 à 8, dans lequel ladite tige d'accès (11) est pourvue à l'une de ses extrémités d'un moyen de connexion (22) pour la vis de serrage (12), et comprend à l'autre extrémité de celle-ci un moyen de tige (13) pour connecter un outil, ledit élément de couvercle (14) étant disposé entre lesdits moyens de connexion et de tige (22, 13) de la tige d'accès (11).

10. Dispositif selon l'une quelconque des revendications 6 à 9, dans lequel ladite tige d'accès (11) est pourvue à l'une de ses extrémités de la vis de serrage (12), et comprenant à l'autre extrémité de la même tige une tête de boulon (13) adaptée pour le serrage de la vis (12) avec la tige (11) au moyen d'une clé à cliquet ou d'une clé à écrous.

11. Dispositif selon l'une quelconque des revendications 6 à 10, dans lequel ladite vis de serrage (12) est pourvue de ou formée sur ou collée à l'extrémité de ladite tige d'accès (11), formant, avec la tige (11) et l'élément (14) qui agit comme un couvercle, un ustensile (25) susceptible d'être couplé au manchon de serrage (1) pendant l'installation.

12. Dispositif selon l'une quelconque des revendications 6 à 11, dans lequel ledit élément (14) qui agit comme un couvercle est conçu pour être couplé au logement externe (7) pour empêcher la vis de serrage (12) ou la tige d'accès (11) elle-même de tomber pendant la préinstallation du dispositif.

13. Ensemble d'un article d'ameublement sanitaire (15) et dispositif pour l'installation dudit article d'ameublement sanitaire (15), selon l'une quelconque des revendications 1 à 12, dans lequel ledit article d'ameublement sanitaire comprend un trou traversant (16) à travers lequel ladite pièce de maintien (2) pouvant être couplée au manchon de serrage (1) est insérée afin de maintenir ledit manchon de serrage (1) contre une paroi interne dudit article d'ameublement sanitaire (15).
